# EUROPÄISCHE PATENTSCHRIFT

(11) **EP 1 700 714 B1**
(45) Veröffentlichungstag und Bekanntmachung des Hinweises auf die Patenterteilung: **16.01.2013**
(21) Anmeldenummer: 06004968.1
(22) Anmeldetag: 10.03.2006
(51) Int. Cl.: B44C 1/10, B29C 47/02, B44C 3/04

(54) **Verfahren und Vorrichtung zur Herstellung eines Profilkörpers mit flexiblem Dekorelement**
Method and apparatus for manufacturing profile members including a flexible decorating element
Procédé et dispositif de fabrication des corps profilés décorés d'un élément flexible

(30) Priorität: 12.03.2005 DE 102005011440
(43) Veröffentlichungstag der Anmeldung: 13.09.2006
(73) Patentinhaber: REHAU AG + Co, 95111 Rehau (DE)
(72) Erfinder: Albig, Andreas, 95192 Lichtenberg (DE); Mehnert, Hans Peter, 95126 Schwarzenbach/Saale (DE)

(56) Entgegenhaltungen:
- EP-A- 0 053 833
- EP-A- 0 079 973
- EP-A- 0 802 032
- DE-A- 10 234 276
- DE-A- 19 522 561
- JP-A- 9 234 776
- JP-A- 61 044 617
- US-A1- 2003 173 717
- US-A1- 2004 224 786

## Beschreibung

Die Erfindung betrifft ein Verfahren und eine Vorrichtung zum Herstellen eines Dekorprofilkörpers, vorzugsweise einer Profilkantenleiste oder eines Wandanschlussprofils, mit einem flexiblen Dekorelement, das mit einem von einer Sichtseite aus sichtbaren Dekor versehen ist und dafür vorgesehen ist, einen Oberflächenabschnitt eines Trägerkörpers zu bedecken.

Der Stand der Technik stellt eine Vielzahl verschiedener Verfahren zur Herstellung von dekorierten Profilen unter Zuhilfenahme unterschiedlicher Dekormaterialien bereit, beispielsweise das Hotstamping, die Bedruckung sowie die Koextrusion von duroplastischen und thermoplastischen Folien.

Die DE 198 23 195 offenbart ein Verfahren und eine zugehörige Vorrichtung zum Bedrucken von Kunststoffwerkstückoberflächen, insbesondere Profilleisten. Dabei wird ein vorgegebenes Muster in einen Rechner eingelesen, der nach Maßgabe des Druckmusters einen angeschlossenen anschlagfreien Drucker, insbesondere Tintenstrahldrucker, zur Erzeugung eines Druckbildes auf der zu bedruckenden Kunststoffoberfläche ansteuern kann.

Aus der DE 102 34 276 ist ein Verfahren zur Steuerung und Überwachung der Herstellung von thermoplastischen Extrusionsprofilen, insbesondere mit einem Inline-Produktionsprozess mit Bedruckungsvorgang bekannt.

Den oben beschriebenen Herstellungsverfahren liegt ein bestimmtes, einheitliches Schema zugrunde, das die folgenden Schritte umfasst: Extrudieren eines Trägerkörpers aus Kunststoff zu einem vorgegebenen Profil, Kalibrieren und Abkühlen des Trägerkörperprofils in einer Kalibriereinrichtung bzw. einem Wasserbad und Aufbringen eines Dekors, beispielsweise einer Dekor- oder Farbbeschichtung oder einer bedruckten Folie, auf das Trägerkörperprofil.

Dabei gestaltet sich der Schritt des Aufbringens des Dekors insbesondere auf gekrümmten Oberflächen des Trägerkörperprofils als schwierig und hinterlässt oftmals sichtbare Spuren auf der Dekorschicht, die in optischer und ästhetischer Hinsicht als störend empfunden werden. Bei sehr kleinen Radien kann es beispielsweise zu Brüchen in der Dekorschicht oder zum Aufplatzen der Farbschicht kommen. Zum Bedrucken einer gekrümmten Oberfläche ist überdies ein teueres Spezialdruckwerkzeug erforderlich, das speziell der zu bedruckenden Kontur angepasst ist, was die Herstellungskosten und insbesondere den Marktpreis des Endprodukts zusätzlich nachteilig beeinflusst

Die US-A-2003/173717 beschreibt ein Verfahren für die Herstellung von Artikeln, die im Werkzeug bzw. in einer Strecke dekoriert werden können. Dabei wird eine bedruckbare Folie mit einer Dicke von höchstens 10 mil zur Verfügung gestellt, die thermoplastisch verformt werden kann, so dass sie zu einer komplexen Formflächengeometrie passt und die die Qualität von im Werkzeug aufbringbaren Bildern verbessert, indem sie Offset-Lithografie, Flexodruck und Tiefdruck ermöglicht. Die Folie für die In-Mold-Dekoration wird elektrostatisch im Werkzeug angehaftet und die auf der Folie aufgebrachte Grafik wird fest mit der Oberfläche des im Werkzeug herzustellenden Formteiles verschmolzen. Wichtig ist hierbei, dass die Folie dazu dient, eine Dekoration im Werkzeug umzusetzen, indem das auf der Folie angeordnete Dekor fest mit der Oberfläche des Formteils verschmolzen wird. Die Folie wird dabei beispielsweise mittels vier farbiger Offset-Lithografie mit einem Bild bedruckt. Das Druckbild wird dann mittels Siebdruck mit einer Beschichtung versehen und in die Öffnung eines Walzenstapels, beispielsweise in eine Formnestseite eines Werkzeuges, eingelegt und elektrostatisch gehalten. Das Werkzeug wird dann geschlossen und ein Kunststoffformteil unter Verwendung thermoplastischer Materialien wird gespritzt.

Die JP-A-09 234776_ beschäftigt sich mit dem Problem, eine Methode zu schaffen zur Herstellung von verzierten, kaschiergeformten Artikeln, die dadurch verziert werden können, dass diskontinuierliche Muster natürlich auf die gesamte Fläche oder sogar auf eine lokale Stelle eines extrusionsgeformten Teiles, wie z.B. einer Regenrinne, aufgebracht werden. Dabei wird die Ölfarbe auf die Oberfläche eines Folienkernmaterials aufgebracht, das aus einem glasfaserverstärkten Vinylchlorid-Vinylacetat Copolymerisat besteht und durch Leitung durch eine Vielzahl von Formgebungsführungen zu einer Rinne mit vorgegebener Form geformt wird, wobei das Kernmaterial in einen düsenübergreifenden Kopf zum Extrusionsformen eingeführt wird, wobei die inneren und äußeren Flächen des zu einer Rinne geformten Kernmaterials durch Schmelzextrusion mit hartem Vinylchlorid-Harz aus einem Extruder beschichtet werden, dann wird es gekühlt und von einer Transportvorrichtung weitertransportiert und dabei mittels einer Kalibrierung maßlich reguliert, woraufhin durch Abschneiden in einer bestimmten Länge eine Regenrinne aus Faserverbundwerkstoff gebildet wird.

Die JP-A-61 044617_ offenbart den Erhalt eines Zierstreifens einer gewünschten Form durch Biegen des aus einer Streifenabrollmaschine kommenden Streifens in eine gewünschte Form und anschließende Zuführung des gebogenen Streifens in eine Extrusionsformmaschine, um diesen Streifen mit einer Harzschicht zu kaschieren. Dabei wird der aus einer Streifenabrollmaschine kommende Zierstreifen einer Streifenbiegemaschine zugeführt, um eine gewünschte Form gebogen zu werden und das gebogene Band wird einer Extrusionsformmaschine zugeführt, wo eine transparente Harzschicht auf die vordere Fläche des gebogenen Streifens und eine Basisschicht auf die rückseitige Fläche davon aufkaschiert wird. Hierzu werden entweder zwei Extrusionsformmaschinen oder eine Doppelstrang-Extrusionsformmaschine verwendet.

Die DE-A-195 22 561 offenbart eine Heizvorrichtung zur Verwendung für ein Verfahren zum gleichzeitigen Spritzgießen und Ornamentieren, so dass eine Dekorationsmusterfolie zwischen einem Paar voneinander gegenüberliegenden Formen, ausgebildet mit einer Entlüftung, und Formen, ausgebildet mit einem Einspritzkanal, angeordnet ist.
Die Dekorationsmusterfolie wird durch die Heizvorrichtung aufgeheizt und aufgeweicht, in engem Kontakt mit einer Hohlraumoberfläche der Form auf der Basis einer Druckdifferenz gebracht, welche durch Absaugen der Form durch die Entlüftung bewirkt wird und ein geschmolzenes Harz in die Formen durch den Einspritzkanal eingespritzt wird, um ein Produkt zu formen, welches auf der Basis der Dekorationsmusterfolie gemustert ist. Die Heizvorrichtung umfasst dabei einen Heizkörper zur Zufuhr von Wärme zu der Dekorationsmusterfolie und Bewegungseinrichtungen für den Heizkörper zur Bewegung des Heizkörpers zwischen einer Heizposition, in welcher der Heizkörper der Dekorationsmusterfolie gegenübergestellt wird, um die Dekorationsmusterfolie aufzuheizen und aufzuweichen, und einer Nicht-Heizposition, in welcher der Heizkörper von einem Raum zwischen einem Paar der Formen in einen derartigen positionellen Zusammenhang herausbewegt wird, so dass die Position einer Heizoberfläche des Heizkörpers in der Heizposition und in der Nicht-Heizposition nicht parallel sind.

Im Lichte dessen liegt der Erfindung die Aufgabe zugrunde, die bekannten Verfahren und Vorrichtungen zur Herstellung von Dekorprofilkörpem zu verbessern und ein verbessertes Verfahren und eine verbesserte Vorrichtung zum Herstellen von Dekorprofilkörpern bereitzustellen, wodurch sich ein Dekorprofilkörper mit einem in optischer und ästhetischer Hinsicht anspruchsvollen Dekor - auch an gekrümmten Oberflächenabschnitten im Sichtbereich - wirtschaftlich und kostengünstig herstellen lässt.

Erfindungsgemäß wird dies durch die kennzeichnenden Merkmale des Anspruches 1 und des Anspruches 5 gelöst. Weitere Ausgestaltungen sind in den Unteransprüchen beschrieben.

Die Erfindung stellt ein Verfahren der eingangs genannten Art bereit, das ferner die folgenden Schritte umfasst: Einbringen des Dekorelements in eine Form, um dem Dekorelement zumindest an der Sichtseite eine vorgegebene Kontur zu verleihen und Anformen des Trägerkörpers an das die vorgegebene Kontur aufweisende Dekorelement, an einer von der Sichtseite unterschiedlichen Seite des Dekorelements. Erfindungsgemäß wird zunächst das Dekorelement, z.B. eine bedruckte Folie, in seine bestimmungsgemäße Form gebracht, um an der Sichtseite jene bestimmungsgemäße Kontur zu erhalten, die der Betrachter im Einbauzustand des zu verarbeitenden Dekorprofilkörpers wahrnimmt. Aufgrund seiner Flexibilität gestaltet sich der Formgebungsprozess des Dekorelements sehr einfach. So muss das Dekorelement nicht nachträglich einer vorgegebenen Kontur des Trägerkörpers angepasst werden, was herkömmlich zur Beschädigung des Dekors, insbesondere einer aufgedruckten Dekor- oder Farbbeschichtung an der Sichtseite führt. Anstelle dessen wird die Form des ohnehin großteils verdeckten Trägerkörpers der bereits festgelegten, bestimmungsgemäßen Kontur des Dekorelements angepasst und an diesem angeformt. Das Anformen des Trägerkörpers bewirkt zudem, dass die Kontur des flexiblen Dekorelements für den bestimmungsgemäßen Gebrauch fixiert wird.

Eine besondere Effizienz bei der Herstellung des Dekorprofilkörpers lässt sich bei der Anwendung eines kontinuierlichen Verfahrens erreichen.

In einem bevorzugten Ausführungsbeispiel weist das Dekorelement eine Dekor- und / oder Farbbeschichtung auf. Derartige Dekor- und / oder Farbbeschichtungen können mit gängigen Werkzeugen, beispielsweise Druckeinrichtungen, auf einfache Weise hergestellt werden.

In einem nicht erfindungsgemäβen Verfahren wird der Trägerkörper im Koextrusionsverfahren an das Dekorelement angeformt. Die Koextrusion ist besonders für den Einsatz in einem besonders effizienten, kontinuierlichen Produktionsverfahren geeignet.

In einem erfindungsgemäßen Verfahren wird der Trägerkörper durch Hinterspritzen des Dekorelements angeformt.

In einer vorteilhaften Ausführungsform des erfindungsgemäßen Verfahrens wird das Dekorelement erst im Laufe des Verfahrens hergestellt. Dazu wird ein farb- und dekomeutraler Grundkörper, z.B. eine transparente, dünne Kunststofffolie extrudiert oder von einer bereitgestellten Vorratsrolle abgewickelt, in einem kontinuierlichen Strang gefördert, und das Dekor wird an dem kontinuierlichen Strang angebracht. Es liegt jedoch auch im Rahmen der Erfindung, dass die dünne Kunststofffolie einfarbig ausgebildet ist. So ist nicht es erforderlich, viele verschiedene Dekorelemente auf Vorrat zu halten. Durch verringerte Lagerhaltungskosten und flexiblere Dekorgestaltung können beispielsweise auch kleine Mengen eines Dekorprofilkörpers mit beliebigem Dekor auf wirtschaftliche Weise hergestellt werden, insbesondere bei Einsatz der Digitaldrucktechnik.

Es ist von Vorteil, wenn der Schritt zum Anbringen des Dekors das Aufdrucken des Dekors und Fixieren des Dekors mit einem Fixiermittel umfasst. Ein nachträgliches Verwischen oder Verschmieren beispielsweise eines aufgedruckten Farbmusters kann somit verhindert werden.

Ein vorteilhaftes Verfahren umfasst das Extrudieren des Dekorelements mit einem vorgegebenen Profil in einem kontinuierlichen Strang, das Fördern, Fixieren und Abkühlen des kontinuierlichen Strangs und das Anbringen des Dekors, vorzugsweise an der Sichtseite des Dekorelements während des Förderns des kontinuierlichen Strangs.

So ist es beispielsweise möglich, den gesamten Dekorprofilkörper innerhalb einer Produktionsstrecke herzustellen, was den Konfektionsaufwand zur Bereitstellung verkaufsfertiger Einheiten sowie die Notwendigkeit zur Vorratshaltung von Zwischenprodukten auf ein Minimum reduziert. Insgesamt kann der Dekorprofilkörper dadurch kostengünstiger hergestellt werden.

Des Weiteren wird die der Erfindung zugrundeliegende Aufgabe durch eine Vorrichtung der eingangs genannten Art gelöst, die eine Einrichtung zum Formen des Dekorelements, um dem Dekorelement zumindest an der Sichtseite eine vorgegebene Kontur zu verleihen, und eine Einrichtung zum Anformen des Trägerkörpers an einer von der Sichtseite unterschiedlichen Seite des Dekorelements aufweist.

Eine für das kontinuierliche Verfahren geeignete Vorrichtung weist eine Fördereinrichtung zum Fördern des Dekorelements in einem kontinuierlichen Strang auf.

Um auch geringe Mengen des Dekorprofilkörpers auf wirtschaftliche Weise herstellen zu können, erweist sich eine Vorrichtung als günstig, die eine Einrichtung zum Anbringen des Dekors am Dekorelement aufweist.

Für die Herstellung von Dekorprofilkörpern mit einem farblich und graphisch vielseitigen und anspruchsvollen Dekor erweist sich eine Vorrichtung als günstig, die eine Druckeinrichtung, vorzugsweise eine Digitaldruckeinrichtung, aufweist.

Eine besonders effiziente und kostengünstige Produktion des Dekorprofilkörpers kann durch eine Vorrichtung bewerkstelligt werden, die zumindest eine Einrichtung zum Extrudieren oder Kalibrieren oder Abkühlen des Dekorelements und / oder Dekorprofilkörpers aufweist.

In einer besonders bevorzugten Ausführungsform der erfindungsgemäßen Vorrichtung ist zumindest eine der oben genannten Einrichtungen der Vorrichtung über ein Netzwerk an eine Steuereinheit angeschlossen und über die Steuereinheit steuerbar. Dadurch lassen sich die wesentlichen Produktionsparameter der einzelnen Fertigungsschritte steuern und aufeinander abstimmen, was die Flexibilität und Effektivität der erfindungsgemäßen Vorrichtung wesentlich erhöht.

Die wesentlichen Merkmale, Vorteile und bevorzugten Ausführungsbeispiele der vorliegenden Erfindung werden nachstehend mit Bezug auf die beiliegenden Zeichnungen beschrieben.

### Kurze Beschreibung der Zeichnungen

- Fig. 1: zeigt eine schematische Darstellung des erfindungsgemäßen Verfahrens bzw. der erfindungsgemäßen Vorrichtung zur Herstellung eines Dekorprofilkörpers.
- Fig. 2a-2d: zeigen Schnittansichten von Bestandteilen des Dekorprofilkörpers in verschiedenen Phasen des erfindungsgemäßen Herstellungsverfahrens, wobei der Dekorprofilkörper ein Kantenband mit einer an der Sichtseite gekrümmten Oberfläche ist.

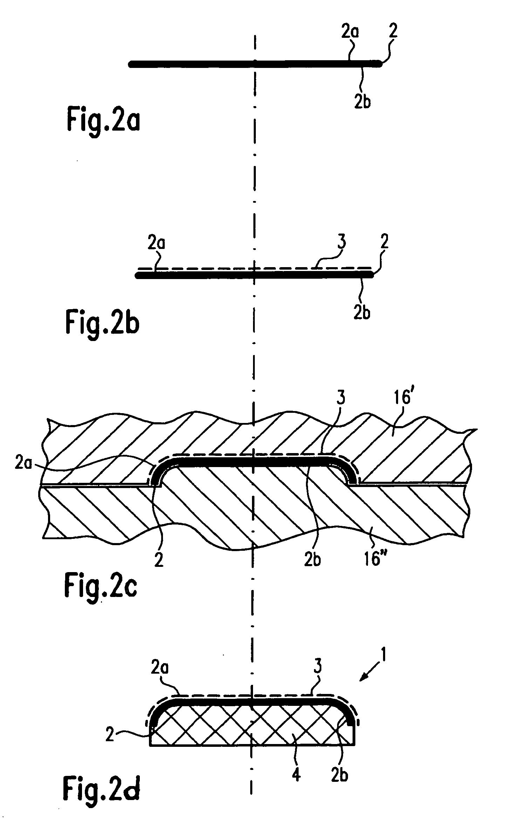

- Fig. 2a: zeigt den Querschnitt eines flächigen Grundkörpers des Dekorelements.
- Fig.2b: zeigt den Querschnitt eines dekorbeschichteten, flächigen Dekorelements.
- Fig. 2c: zeigt eine Schnittansicht eines in einem Formwerkzeug geformten, dekorbeschichteten Dekorelements.
- Fig. 2d: zeigt eine Schnittansicht eines Dekorprofilkörpers mit dem an der Sichtseite konturierten Dekorelement und dem an der Unterseite angeformten Trägerkörper.

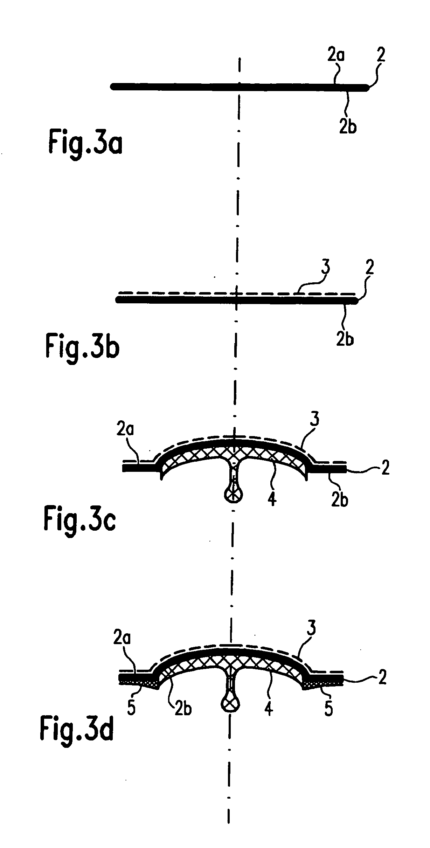

- Fig. 3a-3d: zeigen Schnittansichten von Bestandteilen des Dekorprofilkörpers in verschiedenen Phasen des erfindungsgemäßen Herstellungsverfahrens, wobei der Dekorprofilkörper ein Wandanschlussprofil mit Dichtfunktion ist.
- Fig. 3a u. 3b: gleichen den Ansichten der Figuren 2a und 2b.
- Fig. 3c: zeigt eine Schnittansicht in einer Zwischenstufe des erfindungsgemäßen Herstellungsverfahrens zur Herstellung des Dekorprofilkörpers mit einem an die Unterseite des dekorbeschichteten Dekorelements angeformten Trägerkörper.
- Fig. 3d: zeigt eine Schnittansicht des Wandanschlussprofils mit Dichtfunktion mit einem an die Unterseite eines dekorbeschichteten Dekorelements angeformten Trägerabschnitt und randseitigen Dichtlippen.

### Detaillierte Beschreibung der Zeichnungen

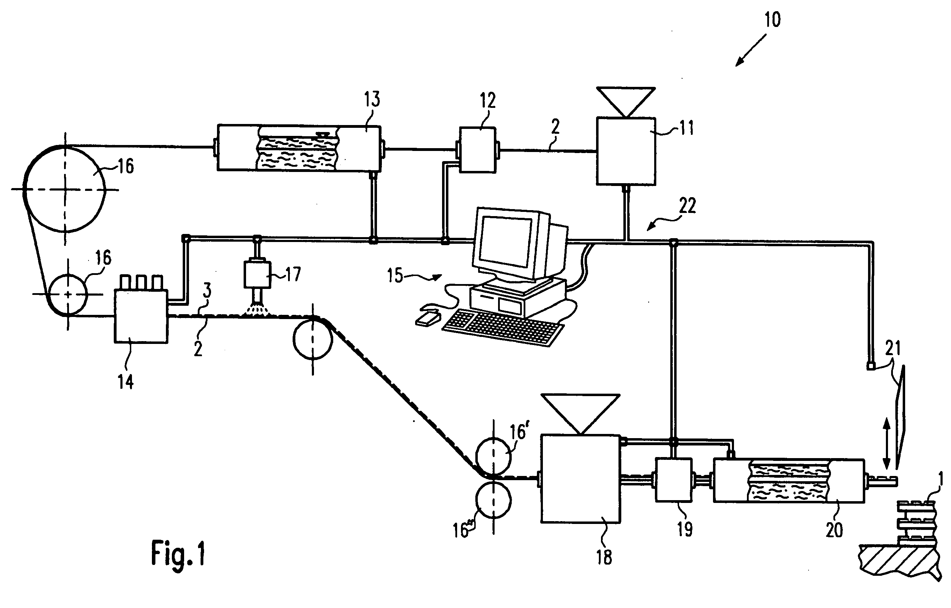

Figur 1 zeigt eine erfindungsgemäße Vorrichtung 10 zur Herstellung eines Dekorprofilkörpers 1 aus einem flexiblen Dekorelement 2, das mit einem von der Sichtseite aus sichtbaren Dekor 3 versehen ist und dafür vorgesehen ist, einen Oberflächenabschnitt eines Trägerkörpers 4 zu bedecken.

Die Vorrichtung 10 umfasst eine erste Einrichtung 11 zum Extrudieren des Grundkörpers des Dekorelements 2 in einem kontinuierlichen Strang in einem vorgegebenen Profil, eine Kalibriereinrichtung 12 zum Kalibrieren des kontinuierlich geförderten Strangs 2 und eine Einrichtung 13, vorzugsweise ein gekühltes Wasserbad, zum Abkühlen und Formfixieren des Strangs 2. Die teilweise motorisch angetriebenen Rollen 16 stellen eine Fördereinrichtung zum Fördern des kontinuierlichen Strangs 2 dar. Des Weiteren ist eine Einrichtung 14 zum Anbringen des Dekors 3 am Strang 2 sowie eine Fixiereinrichtung 17 zum Fixieren des am Strang 2 angebrachten Dekors 3 hinter der Kühleinrichtung 13 angeordnet. In der Förderrichtung des nun dekorbeschichteten Dekorelements 2 folgen nacheinander eine Einrichtung 16 zum Formen des Dekorelements 2, um dem Dekorelement 2 eine vorgegebene Kontur zu verleihen und eine Einrichtung 18 zum Anformen des Trägerkörpers 4 an einer von der Sichtseite 2a unterschiedlichen Seite 2b des Dekorelements 2, eine Kalibriereinrichtung 19 zum Kalibrieren des aus dem dekorbeschichteten Dekorelement 2 und dem Trägerkörper 4 bestehenden Dekorprofilkörpers 1, eine Kühleinrichtung 20 zum Abkühlen des Dekorprofilkörpers 1 und eine Schneideinrichtung 21 zum Ablängen bestimmter vorgegebener Längeneinheiten des Dekorprofilkörpers 1. Sämtliche Einrichtungen 11, 12, 13, 14, 16, 17, 18, 19, 20 und 21 sind über ein Netzwerk 22 an eine Steuereinheit 15 angeschlossen und sind über die Steuereinheit 15 steuerbar.

Das Dekorelement 2 besteht aus einem farb- und dekorneutralen, flexiblen Grundkörper, an dem im Laufe des Verfahrens ein Dekor 3 angebracht wird. Der Grundkörper des Dekorelements 2 wird im beschriebenen Beispiel extrudiert, kalibriert und abgekühlt, kann aber beispielsweise auch auf einer Vorratsrolle bereitgestellt werden und im Laufe des Verfa Alternativ kann das dekorbeschichtete Dekorelement 2 bereits vorgefertigt auf einer Vorratsspule bereitgestellt werden. Dabei wird dann in Laufe des Verfahrens lediglich der Trägerkörper 4 angeformt. Im beschriebenen Ausführungsbeispiel ist der Grundkörper des Dekorelements 2 eine flexible, farb- und dekorneutrale bzw. transparente Kunststofffolie, die im Wesentlichen eben ist und eine Oberseite 2a und eine Unterseite 2b aufweist.

Mit der Einrichtung 11 wird das Dekorelement 2 in einem kontinuierlichen Strang extrudiert. Die Einrichtung 11 umfasst einen gewöhnlichen Extruder mit entsprechendem Formwerkzeug (nicht gezeigt) zum Profilieren des Dekorelements 2. Die Extrusionsverfahrensparameter, z. B. die Temperatur und der Druck beim Aufschmelzen, die Dosierung der Grundmaterialien und Ausgangsstoffe des Dekorelements 2 sowie das Extrusionswerkzeug sind einstellbar und können über die Steuereinheit 15 eingestellt werden.

Nach dem Austritt aus der Einrichtung 11 durchläuft das im kontinuierlichen Strang geförderte Dekorelement 2 die Kalibriereinrichtung 12 und die Kühleinrichtung 13 und wird kalibriert bzw. gekühlt. In der erfindungsgemäßen Vorrichtung 10 werden im Prinzip herkömmliche Kalibriereinrichtungen 12 und 19 sowie Kühleinrichtungen 13 und 20 verwendet. Über elektronische Schnittstellen sind die Kalibriereinrichtungen 12, 19 bzw. Kühleinrichtungen 13, 20 mit der Steuereinheit 15 verbunden. Bestimmte Parameter wie beispielsweise der Druck an der Außenseite des zu kalibrierenden Dekorelements 2 in den Kalibriereinrichtungen 12 und 19 sowie die Kühltemperatur in den temperierbaren Kühleinrichtungen 13, 20 sind über die Steuereinheit 15 steuerbar.

Als Fördereinrichtung 16 zum Fördern des im kontinuierlichen Strang geförderten Dekorelement 2 ist zumindest eine der (Umlenk-)Rollen 16 mit einem Elektromotor (nicht gezeigt) versehen, der eine elektronische Schnittstelle aufweist und über das Netzwerk 22 mit der Steuereinheit 15 verbunden und steuerbar ist. Der Elektromotor wird in Abstimmung mit der Extrusionsgeschwindigkeit gesteuert, um das Dekorelement 2 in einem kontinuierlichen Strang zu fördern.

Die Einrichtung 14 umfasst diverse Mittel (nicht gezeigt) zum Vorbehandeln des kontinuierlichen Strangs bzw. des Grundkörpers des Dekorelements 2, um eine Dekorbeschichtung dessen zu ermöglichen, und diverse Mittel (nicht gezeigt) um das Dekor 3 am kontinuierlichen Strang bzw. am Grundkörper des Dekorelements 2 anzubringen.

Die Einrichtung 14 ist im beschriebenen Beispiel mit einer elektronisch ansteuerbaren Digitaldruckeinrichtung ausgestattet. Mit der Digitaldruckeinrichtung ist ein Dekor 3 nach Maßgabe eines in einer elektronischen Bilddatei vorliegenden Druckmusters auf das Dekorelement 2 aufdruckbar werden. Bestimmte Vorbehandlungsparameter, wie eine Beflammung (Temperatur und Dauer), die Verwendung von physischen oder chemischen Vorbehandlungsverfahren und eine Haftvermittlerbeschichtung für die nachfolgende Bedruckung sind über die Steuereinheit 15 einstellbar. Ebenso sind die Bedruckungsparameter wie das Design des Dekors 3, die Auswahl der Druckverfahren, die Druckfarbenrezepturen und die Druckmaschineneinstellungen über die Steuereinheit 15 steuerbar, und sind über das Netzwerk 22 von der Steuereinheit 15 auf die Digitaldruckeinrichtung übertragen. In einer vorteilhaften Ausführungsform ermöglicht die Einrichtung 14 eine mehrflächige Dekorbeschichtung bei gleichzeitiger Oberflächenprägung, wobei die Beschichtungsparameter wie die Art der Beschichtung, die Oberflächenprägung und -struktur, die Schichtzusammensetzung und die Nachbehandlung über die Steuereinheit 15 steuerbar sind.

Die nachgeschaltete Fixiereinrichtung 17 ist dazu vorgesehen, um das nun dekorbeschichtete Dekorelement 2, insbesondere den dekorbeschichteten Oberflächenabschnitt, mit einem Fixiermittel zu beaufschlagen. Über eine Schnittstelle und über das Netzwerk 22 ist die Fixiereinrichtung 17 mit der Steuereinheit 15 verbunden. Bestimmte Parameter z.B. die Zuführmenge des Fixiermittels sind über die Steuereinheit 15 steuerbar.

Die Einrichtung 18 zum Anformen des Trägerkörpers 4 an das dekorbeschichtete Dekorelement 2 umfasst einen für das Koextrusionsverfahren geeigneten Extruder mit geeignetem Formwerkzeug und ist über eine elektronische Schnittstelle und das Netzwerk 22 mit der Steuereinheit 15 verbunden. Bestimmte Extrusionsverfahrensparameter wie die Temperatur und der Druck, die Dosierung der Grundmaterialien für den anzuformenden Trägerkörper 4 sowie das Extrusionswerkzeug sind über die Steuereinheit 15 steuerbar. Der Einrichtung 18 zum Anformen des Trägerkörpers 4 ist eine weitere Kalibriereinrichtung 19 zum Kalibrieren des Dekorprofilkörpers 1 und eine weitere Kühleinrichtung 20 zum Abkühlen des Dekorprofilkörpers 1 nachgeschaltet. Die Kalibriereinrichtung 19 sowie die Kühleinrichtung 20 sind in gleicher Weise wie die oben beschriebene Kalibriereinrichtung 12 und die Kühleinrichtung 13 über das Netzwerk 22 mit der Steuereinheit 15 verbunden und entsprechend ansteuerbar.

Durch die über das Netzwerk 22 mit der Steuereinheit 15 verbundene Schneideinrichtung 21 sind bestimmte Längen nach Maßgabe der vom Kunden zu bestimmenden Einheit des Dekorprofilkörpers 1 ablängbar.

Mit Bezug auf die Figuren 1 bis 3 werden nachstehend die wesentlichen Schritte des erfindungsgemäßen Herstellungsverfahrens erläutert.

Mit der Extrusionseinrichtung 11 wird eine flächige, dünne, flexible und transparente Folie als Grundkörper des Dekorelements 2 aus einem extrudierbaren Material extrudiert und in einem kontinuierlichen Strang gefördert. Es liegt jedoch auch im Rahmen der Erfindung, dass die flächige, dünne und flexible Folie einfarbig ausgebildet ist. Die Oberseite 2a stellt im Einbauzustand des Dekorprofilkörpers 1 die Sichtseite des Dekorprofilkörpers 1 dar. Die Unterseite 2b liegt auf der dazu entgegengesetzten Seite der Folie 2. Die noch heiße Folie 2 wird in der Kalibriereinrichtung 12 kalibriert, d.h. in ihre zunächst ebene Form für die Bedruckung gebracht, und in der nachgeschalteten Kühleinrichtung 13 abgekühlt. Dabei wird die Folie 2 im Wesentlichen auf Raumtemperatur abgekühlt und die bestimmungsgemäße, ebene Bandform fixiert.

Der Grundkörper des Dekorelements 2 wird dann in dem kontinuierlichen Strang über die Rollen 16 der Einrichtung 14 zugeführt, dort entsprechend vorbehandelt, um das Dekor 3 aufnehmen zu können und dann mit dem Dekor 3 versehen. Dabei können beispielsweise Dekorpartikel in den Grundkörper des Dekorelements 2 eingelagert werden oder dessen Unter- und/oder Oberseiten geprägt, bedruckt oder in sonstiger Weise bearbeitet werden. Im beschriebenen Beispiel wird der Grundkörper des Dekorelements 2 vorbehandelt, um Druckfarbe aufnehmen zu können und ist dann auf dessen Oberseite 2a nach Maßgabe eines in der Steuereinheit 15 festgelegten Musters bedruckbar.

In der nachgeschalteten Fixiereinrichtung 17 wird das Dekorelement 2 insbesondere an der dekorbeschichteten Oberseite 2a, mit einem Fixiermittel beaufschlagt bzw. besprüht. Durch das Fixieren der Dekorschicht 3 wird ein nachträgliches Verlaufen oder Verwischen der Druckfarbe verhindert und gleichzeitig die Oberflächenqualität verbessert.

Über weitere Rollen 16 wird das dekorbeschichtete Dekorelement 2 nun einer Einrichtung zum Formen des Dekorelements 2 zugeführt, um dem Dekorelement 2 eine vorgegebene Kontur zu verleihen. Dabei weisen zwei gegenläufige Rollen 16', 16" entsprechende formgebende Abschnitte auf. Dieser Vorgang ist in Figur 2c schmenhaft dargestellt.

Bei einem Formwerkzeug zum Erzeugen einer konvexen Oberflächenkontur an der Sichtseite 2a ist eine untere Rolle 16" am Umfang mit einem im Schnitt bogenförmigen Vorsprung ausgestattet, der in eine bogenförmige Ausnehmung am Umfang der oberen Rolle 16' hineinragt. Das zwischen der oberen Rolle 16' und der unteren Rolle 16" hindurchlaufende, dekorbeschichtete Dekorelement 2 wird in den Hohlraum zwischen dem Vorsprung der unteren Rolle 16" und dem Boden der Ausnehmung der oberen Rolle 16' gedrückt und in seine bestimmungsgemäße Form gebracht. Die Formeinrichtung kann allerdings beliebig gestaltet und beispielsweise auch innerhalb der Extrudiereinrichtung 18 vorgesehen sein.

In der Einrichtung 18 zum Extrudieren des Trägerkörpers 4 wird der Trägerkörper 4 an der Unterseite 2b des Dekorelements 2 im Koextrusionsverfahren angeformt. Die wesentlichen Extrusionsparameter sind, wie oben beschrieben, über die Steuereinheit 15 gesteuert.

In der nachgeschalteten Kalibriereinrichtung 19 und der nachgeschalteten Kühleinrichtung 20 wird der Dekorprofilkörper 1, der nun das dekorbeschichtete Dekorelement 2 und den Tragkörper 4 umfasst, kalibriert und im Wesentlichen auf Raumtemperatur abgekühlt. Die von der Steuereinrichtung 15 ansteuerbare Schneideinrichtung 21 schneidet von dem kontinuierlich geförderten Materialstrang bestimmten Längen, vorzugsweise Verkaufslängen des Dekorprofilkörpers 1 ab.

Die Figuren 2a und 3a zeigen jeweils Schnittansichten einer extrudierten, flächigen und dünnen Kunststofffolie 2, die den flexiblen und farb- und dekorneutralen Grundkörper des Dekorelements 2 mit der Oberseite 2a und der Unterseite 2b bildet, in einem Zustand vor dem Eintritt in die Druckeinrichtung 14. Vor dem Eintritt in die Druckeinrichtung 14 hat das Dekorelement 2 eine flächige Gestalt und erstreckt sich im Wesentlichen in einer Ebene. Sowohl die Oberseite 2a als auch die Unterseite 2b sind im Wesentlichen eben und demnach leicht zu bedrucken.

Die Figuren 2b und 3b zeigen jeweils Schnittansichten des dekorbeschichteten Dekorelements 2 unmittelbar nach dem Austritt der Druckeinrichtung 14 und vor dem Einbringen in die Formeinrichtung 16, mit dem Dekor 3 auf der Sichtseite 2a.

Figur 2c zeigt einen Ausschnitt eines Schnitts durch die zwei gegenläufigen, zuvor als Formwerkzeug beschriebenen Rollen 16', 16" an der Kontaktstelle. Dem Dekorelement 2 wird in dem Formwerkzeug die vorgegebene Form bzw. zumindest an der Sichtseite 2b die vorgegebene Kontur verliehen.

Figur 2d zeigt einen Schnitt durch den fertigen Dekorprofilkörper 1, der nach dem erfindungsgemäßen Verfahren und mit der erfindungsgemäßen Vorrichtung 10 hergestellt wurde. Der Dekorprofilkörper 1 weist das an der Sichtseite 2a dekorbeschichtete Dekorelement 2 auf, an dessen Unterseite 2b der Trägerkörper 4 im Koextrusionsverfahren angeformt bzw. angespritzt wurde. Die Kanten des Dekorprofilkörpers 1 sind an der Sichtseite abgerundet, wobei die Oberseite des dekorbeschichteten Dekorelements 2 und die daran angrenzenden Oberflächenabschnitte des Trägerkörpers 4 in den Randbereichen des Dekorprofilkörpers 1 in etwa zueinander fluchten. Dabei entsteht ein formschöner Dekorprofilkörper 1 ohne störende Ränder im Übergangsbereich zwischen dem Dekorelement 2 und dem Trägerkörper 4, mit einem in optischer und ästhetischer Hinsicht ansprechenden Dekor auf der Sichtseite. Der in Figur 2d in einer Schnittansicht dargestellte Dekorprofilkörper 1 wird vorzugsweise als Kantenleiste verwendet und dazu mit der Unterseite, d. h. der der Sichtseite 2a gegenüberliegenden Seite, beispielsweise an eine Kante einer Möbelbauplatte angebracht.

Nach dem erfindungsgemäßen Verfahren bzw. mit der erfindungsgemäßen Vorrichtung 10 lassen sich aber auch diverse andere Dekorprofilkörper 1, beispielsweise Wandanschlussprofile, herstellen, wie in den Figuren 3c und 3d dargestellt ist. Dazu wird der Trägerkörper 4 zunächst auf die Unterseite des geformten, dekorbeschichteten Dekorelements 2 angeformt. Anschließend werden an den Randbereichen zusätzlich die Dichtlippen 5 angeformt, so dass ein Dekorprofilkörper 1, insbesondere ein Wandanschlussprofil, entsteht, wobei das dekorbeschichtete Dekorelement 2 den Oberflächenabschnitt des Wandanschlussprofils an der Sichtseite vollständig überlappt.

## Patentansprüche

1. Verfahren zur Herstellung eines Dekorprofilkörpers (1) mit einem flexiblen Dekorelement (2), das mit einem von einer Sichtseite (2a) aus sichtbarem Dekor (3) versehen ist und dafür vorgesehen ist, einen Oberflächenabschnitt eines Trägerkörpers (4) zu bedecken, mit den Schritten:
• Fördern des Dekorelements (2) in einem kontinuierlichen Strang
• und Anbringen des Dekors (3) an dem kontinuierlichen Strang vor dem Einbringen des Dekorelements (2) in die Form (16), **gekennzeichnet durch** die nachfolgenden Schritte:
• Einbringen des Dekorelements (2) in eine Form (16), um dem Dekorelement (2) zumindest an der Sichtseite (2a) eine vorgegebene Kontur zu verleihen,
• Anformen des Trägerkörpers (4) an das die vorgegebene Kontur aufweisende Dekorelement (2), an einer von der Sichtseite (2a) unterschiedlichen Seite (2b) des Dekorelements (2),
• wobei der Trägerkörper (4) **durch** Hinterspritzen des Dekorelements (2) angeformt wird.

2. Verfahren nach Anspruch 1, **dadurch gekennzeichnet, dass** das Verfahren ein kontinuierliches Verfahren ist.

3. Verfahren nach einem der Ansprüche 1 oder 2, **dadurch gekennzeichnet, dass** das Dekorelement (2) eine Dekor- oder Farbbeschichtung (3) aufweist.

4. Verfahren nach einem der vorangegangenen Ansprüche, **dadurch gekennzeichnet, dass** das Dekor auf das Dekorelement (2) aufgedruckt wird, insbesondere bei Einsatz der Digitaldrucktechnik.

5. Vorrichtung zur Herstellung eines Dekorprofilkörpers (1) aus einem flexiblen Dekorelement (2), das mit einem von einer Sichtseite (2a) aus sichtbarem Dekor (3) versehen ist und dafür vorgesehen ist, einen Oberflächenabschnitt eines Trägerkörpers (4) zu bedecken,
• mit einer Fördereinrichtung zum Fördern des Dekorelements (2) in einem kontinuierlichen Strang,
• mit einer Einrichtung (14) zum Anbringen des Dekors (3) am Dekorelement (2), gekennzeichnet
• mit einer Einrichtung (16) zum Formen des Dekorelements (2), um dem Dekorelement (2) zumindest an der Sichtseite (2a) eine vorgegebene Kontur zu verleihen, und
• mit einer Einrichtung (18) zum Anformen des Trägerkörpers (4) an dem mit der vorgegebenen Kontur versehenen Dekorelement (2), an einer von der Sichtseite (2a) unterschiedlichen Seite (2b) des Dekorelements (2),
• wobei der Trägerkörper (4) durch Hinterspritzen des Dekorelements (2) angeformt ist.

6. Vorrichtung (10) nach Anspruch 5, **dadurch gekennzeichnet, dass** die Einrichtung (14) zum Anbringen des Dekors (3) eine Druckeinrichtung, vorzugsweise eine Digitaldruckeinrichtung ist.

7. Vorrichtung (10) nach einem der Ansprüche 5 bis 6, **gekennzeichnet durch** eine Einrichtung (1) zum Extrudieren des Dekorelements (2), eine Einrichtung (12) zum Kalibrieren des Dekorelements (2) und eine Einrichtung (13) zum Abkühlen des Dekorelements (2).

8. Vorrichtung (10) nach einem der Ansprüche 5 bis 7, **gekennzeichnet durch** eine Einrichtung (19) zum Kalibrieren des Dekorprofilkörpers (1), eine Einrichtung (20) zum Abkühlen des Dekorprofilkörpers (1) und eine Einrichtung (21) zum Ablängen des Dekorprofilkörpers (1).

9. Vorrichtung (10) nach einem der Ansprüche 5 bis 8, **dadurch gekennzeichnet, dass** zumindest eine der Einrichtungen (11, 12, 13, 14, 16, 17, 18, 19, 20, 21) über ein Netzwerk (22) an einer Steuereinheit (15) angeschlossen ist und von der Steuereinheit steuerbar ist.

## Claims

1. Method for manufacturing a decorative profile member (1) including a flexible decorating element (2), which is provided with a decoration (3) that is visible from a visible side (2a) and is intended for covering a portion of the surface of a supporting member (4), comprising the steps of:
• conveying the decorating element (2) in a continuous strand
• and attaching the decoration (3) to the continuous strand before introducing the decorating element (2) into the moulding means (16), **characterized by** the following steps:
• introducing the decorating element (2) into a moulding means (16), in order to give the decorating element (2) a predetermined contour, at least on the visible side (2a),
• moulding the supporting member (4) onto the decorating element (2) having the predetermined contour, on a side (2b) of the decorating element (2) other than the visible side (2a),
• the supporting member (4) being moulded on by coextrusion of the decorating element (2).

2. Method according to Claim 1, **characterized in that** the method is a continuous method.

3. Method according to either of claims 1 and 2, **characterized in that** the decorating element (2) has a decorative or coloured coating (3).

4. Method according to one of the preceding claims, **characterized in that** the decoration is printed onto the decorating element (2), in particular by using digital printing technology.

5. Apparatus for manufacturing a decorative profile member (1) comprising a flexible decorating element (2), which is provided with a decoration (3) that is visible from a visible side (2a) and is intended for covering a portion of the surface of a supporting member (4),
• with a conveying device for conveying the decorating element (2) in a continuous strand,
• with a device (14) for attaching the decoration (3) to the decorating element (2), **characterized**
• **by** a device (16) for moulding the decorating element (2), in order to give the decorating element (2) a predetermined contour, at least on the visible side (2a), and
• by a device (18) for moulding the supporting member (4) onto the decorating element (2) provided with the predetermined contour, on a side (2b) of the decorating element (2) other than the visible side (2a),
• the supporting member (4) being moulded on by coextrusion of the decorating element (2).

6. Apparatus (10) according to Claim 5, **characterized in that** the device (14) for attaching the decoration (3) is a printing device, preferably a digital printing device.

7. Apparatus (10) according to either of Claims 5 and 6, **characterized by** a device (1) for extruding the decorating element (2), a device (12) for calibrating the decorating element (2) and a device (13) for cooling the decorating element (2).

8. Apparatus (10) according to one of Claims 5 to 7, **characterized by** a device (19) for calibrating the decorative profile member (1), a device (20) for cooling the decorative profile member (1) and a device (21) for cutting the decorative profile member (1) to length.

9. Apparatus (10) according to one of Claims 5 to 8, **characterized in that** at least one of the devices (11, 12, 13, 14, 16, 17, 18, 19, 20, 21) is connected to a control unit (15) via a network (22) and can be controlled by the control unit.

## Revendications

1. Procédé de fabrication d'un corps profilé décoratif (1) comprenant un élément décoratif flexible (2) qui est pourvu d'une décoration (3) visible depuis un côté visible (2a) et qui est prévu pour recouvrir une section de surface d'un corps de support (4), comprenant les étapes suivantes :
- transport de l'élément décoratif (2) en une chaîne continue,
- et application de la décoration (3) sur la chaîne continue avant l'introduction de l'élément décoratif (2) dans le moyen de moulage (16), **caractérisé par** les étapes suivantes :
- insertion de l'élément décoratif (2) dans un moyen de moulage (16) pour conférer un contour prédéfini à l'élément décoratif (2) au moins sur le côté visible (2a),
- formage du corps de support (4) sur l'élément décoratif (2) présentant le contour prédéfini, sur un côté (2b) de l'élément décoratif (2) différent du côté visible (2a),
- le corps de support (4) étant formé par surmoulage par injection de l'élément décoratif (2).

2. Procédé selon la revendication 1, **caractérisé en ce que** le procédé est un procédé continu.

3. Procédé selon la revendication 1 ou 2, **caractérisé en ce que** l'élément décorative (2) comprend un revêtement décoratif ou coloré (3).

4. Procédé selon l'une quelconque des revendications précédentes, **caractérisé en ce que** la décoration est imprimée sur l'élément décoratif (2), en particulier lors de l'utilisation de la technique d'impression numérique.

5. Dispositif de fabrication d'un corps profilé décoratif (1) à partir d'un élément décoratif flexible (2) qui est pourvu d'une décoration (3) visible depuis un côté visible (2a) et qui est prévu pour recouvrir une section de surface d'un corps de support (4),
- comprenant un dispositif de transport pour transporter l'élément décoratif (2) en une chaîne continue,
- comprenant un dispositif (14) pour appliquer la décoration (3) sur l'élément decorative (2), **caractérisé par**
- un dispositif (16) pour former l'élément décoratif (2), afin de conférer un contour prédéfini à l'élément décoratif (2) au moins sur le côté visible (2a), et
- un dispositif (18) pour former le corps de support (4) sur l'élément decorative (2) pourvu du contour prédéfini, sur un côté (2b) de l'élément décoratif (2) différent du côté visible (2a),
- le corps de support (4) étant formé par surmoulage par injection de l'élément décoratif (2).

6. Dispositif (10) selon la revendication 5, **caractérisé en ce que** le dispositif pour appliquer la décoration (3) est un dispositif d'impression, de préférence un dispositif d'impression numérique.

7. Dispositif (10) selon la revendication 5 ou 6, **caractérisé par** un dispositif (1) pour extruder l'élément décoratif (2), un dispositif (12) pour calibrer l'élément décoratif (2) et un dispositif (13) pour refroidir l'élément décoratif (2).

8. Dispositif (10) selon l'une quelconque des revendications 5 à 7, **caractérisé par** un dispositif (19) pour calibrer le corps profilé décoratif (1), un dispositif (20) pour refroidir le corps profilé décoratif (1) et un dispositif (21) pour couper à longueur le corps profilé décoratif (1).

9. Dispositif (10) selon l'une quelconque des revendications 5 à 8, **caractérisé en ce qu'**au moins l'un des dispositifs (11, 12, 13, 14, 16, 17, 18, 19, 20, 21) est raccordé au moyen d'un réseau (22) à une unité de commande (15) et peut être commandé par l'unité de commande.
